# EUROPEAN PATENT SPECIFICATION

(11) **EP 4 242 033 B1**
(45) Date of publication and mention of the grant of the patent: **27.05.2026**
(21) Application number: 23160293.9
(22) Date of filing: 06.03.2023
(51) Int. Cl.: B60K 26/02, B60K 28/10, A01B 76/00, A01D 75/20, A01B 59/00, A01B 69/00, B60K 35/10, B60K 35/21, B60K 35/28, B60K 35/60, B60Q 1/50, B60Q 1/00, B62D 49/00, B60W 30/18, B60Q 1/30

(54) **METHOD FOR CONTROLLING AN INCHING FUNCTIONALITY OF A WORK VEHICLE**
VERFAHREN ZUR STEUERUNG EINER TIPPBETRIEB EINES ARBEITSFAHRZEUGS
PROCÉDÉ DE COMMANDE D'UNE FONCTIONNALITÉ LENTE D'UN VÉHICULE DE TRAVAIL

(30) Priority: 08.03.2022 IT 202200004388
(43) Date of publication of application: 13.09.2023
(73) Proprietor: CNH Industrial Italia S.p.A., 10156 Torino (IT)
(72) Inventor: Dell'Aversana, Raffaele Edoardo, 10156 Turin (IT); Mescia, Claudio, 10156 Turin (IT); Mantovani, Michele, 10156 Turin (IT)
(74) Representative: CNH Industrial IP Department

(56) References cited:
- US-A1- 2011 144 869
- STILL GMBH: "Original instructions Electric tow tractor LTX 70 LTX 80 LTX-T08", 30 September 2019 (2019-09-30), XP055973820, Retrieved from the Internet <URL:http://sps-intl.com/wp-content/uploads/2021/04/LTX_70_80_EN_Manual.pdf> [retrieved on 20221021]

## Description

### TECHNICAL FIELD

The present invention concerns a method for controlling an inching functionality of a work vehicle.

The present invention finds its preferred, although not exclusive, application in a method for controlling an agricultural vehicle such as a tractor.

### BACKGROUND OF THE INVENTION

As is known, work vehicles such as agricultural vehicles are provided with a rear connection assembly, for instance comprising a drawbar and a three-point hitch for the attachment of the work implements to be carried or towed by the work vehicle.

Moreover, such work vehicles are provided with a powertrain assembly configured to deliver torque to at least one pair of wheels to allow motion of the work vehicle on the ground.

Such work vehicles may be provided with a so-called inching functionality (slow approaching functionality) that is configured to control the powertrain assembly of the work vehicle in order to move this latter backward and forward at very slow speeds, as shown in US2011/144869A1.

More in detail, such work vehicles are provided inching control switches configured to be operated by a user for controlling such inching functionality, thus allowing the user to slowly maneuver the work vehicle forward and backward, in order to align precisely the rear connection assembly of the work vehicle with respect to the work implement to be attached

Such inching control switches are usually located outside the work vehicle, to allow the user to visually check the position of the rear connection assembly of the work vehicle with respect to the work implement to be attached when operating such inching control switches.

According to the above, when operating such inching control switches, the user stands really close to the rear connection assembly of the work vehicle, between a rear wheel of the work vehicle and the work implement to be attached thereto. Therefore, it is clear that the risk of incident is high.

In addition, a user operating nearby the work vehicle may accidentally press such inching control switches, thereby causing undesirable movements of the work vehicle.

Therefore, the need is felt to improve the safety of an inching functionality on a work vehicle.

Aim of the present invention is to satisfy the above mentioned needs in a simple and cost effective manner.

### SUMMARY OF THE INVENTION

The aforementioned aim is reached by a method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a rear portion of a work vehicle, and
- Figure 2 is a flow chart representing the control executed according to the method of the invention.

### DETAILED DESCRIPTION OF THE INVENTION

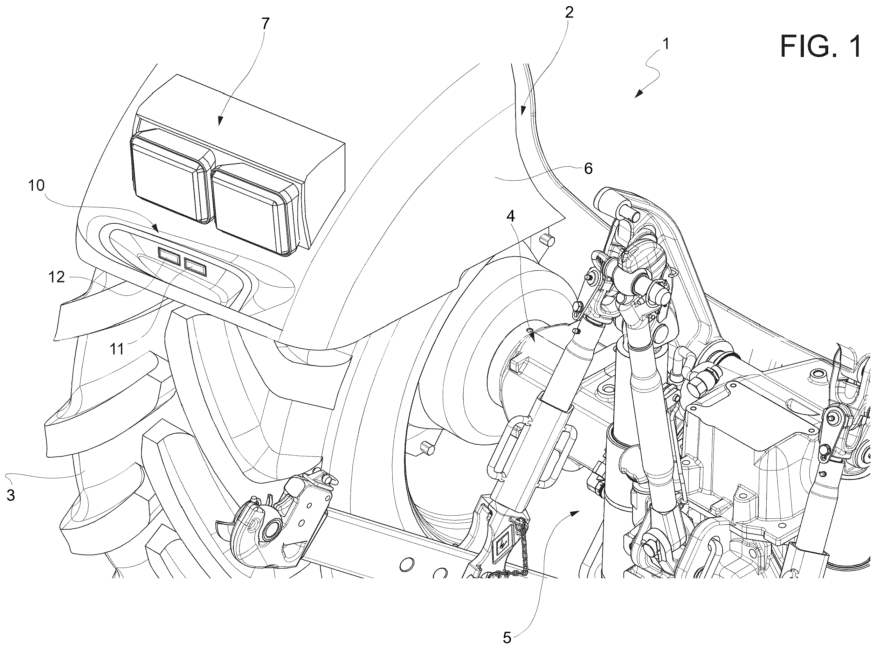

Figure 1 shows a rear portion of a work vehicle 1, specifically an agricultural vehicle such as a tractor.

Work vehicle 1 comprises a powertrain assembly (not shown) configured to provide a torque to allow the motion of a vehicle body 2 with respect to ground, e.g. thanks to at least one pair wheels 3 (only one partially shown in Figure 1).

As known and not shown, powertrain assembly may comprise an engine and a drivetrain assembly, which is interposed between the engine and an axle 4 of the vehicle and is configured to transmit the torque delivered by engine to the axle 4 of the work vehicle 1.

Moreover, as known, work vehicle 1 may be provided with at least one connection assembly configured to be attached to the work implements to be carried or towed by the work vehicle 1.

More in detail, such connection assembly may comprise at least a rear connection assembly 5 (partially shown in Figure 1) arranged on a rear portion of the work vehicle 1. As known, the rear connection assembly 5 may comprise a drawbar and/or a three-point hitch and will not be further detailed for sake of brevity.

In addition, as known, work vehicle 1 may comprise at least one rear fender 6 that is fixed to the body 2 of the work vehicle 1 and is shaped in order to at least partially cover a rear wheel 3 of the work vehicle 1. Preferably, work vehicle 1 comprises a pair of rear fender 6, one for each rear wheel 3 of the work vehicle 1 (only one partially shown in Figure 1).

Moreover, work vehicle 1 comprise at least one lighting device that is adapted to be arranged on the body 2 of the work vehicle 1 and is configured to perform, on command, specific light functions.

More in detail, such lighting device may comprise at least one rear lighting device 7, i.e. a taillight, configured to be arranged on a rear portion of the body 2 of the work vehicle 1 with the function of signaling the position, the sudden deceleration, and/or the turning direction, and/or with the function of lighting the area surrounding the work vehicle 1.

Preferably, work vehicle 1 may comprise a pair of lighting devices 7, each of which may be arranged on a rear fender 6 of the work vehicle 1.

Lighting device 7 is configured to emit, on command, at least one light beam with a predetermined light function.

In particular, the lighting device 7 may be configured to emit, on command, a light beam signaling the sudden deceleration (i.e. the braking) of the work vehicle. In other words, lighting device 7 may comprise a rear brake light.

In addition, work vehicle 1 is provided with at least one inching control device 10 configured to be operated by a user to control an inching functionality of the work vehicle 1.

Preferably, such inching control device 10 may be arranged on the body 2 of the work vehicle 1, such that it is operable from outside the work vehicle 1.

More in detail, according to the exemplary embodiment shown, the inching control device 10 may be carried by a rear fender 6 of the work vehicle 1, and more specifically it may be arranged on this latter in a way to be operated from the environment by a user near to the body 2 of the work vehicle 1.

In particular, the inching control device 10 may be arranged in the neighborhood of the lighting device 7, preferably adjacent to this latter.

As known, such inching functionality may be configured to control the powertrain assembly, i.e. the drivetrain assembly, of the work vehicle 1 to slowly move this latter forward or backward when the inching control device 10 is operated.

More in detail, the inching control device 10 comprises a forward inching command 11, e.g. a button or a switch or the like, configured to be operated by the user to impart control signals to move forward the work vehicle 1.

In addition, the inching control device 10 comprises a backward inching command 12, e.g. a button or a switch or the like, configured to be operated by the user to impart control signals to move backward the work vehicle 1.

The work vehicle 1 may comprise an electronic control unit (not shown) that is electrically connected to such inching control device 10 and comprises elaboration means configured to retrieve data related to the operation of such inching control device 10. Such electronic control unit may be configured to elaborate such data to provide control signal to the powertrain assembly, i.e. to the drivetrain assembly, according to such inching functionality.

More in detail, the electronic control unit may be electrically connected to the forward inching command 11 and to the backward inching command 12 for receiving control signal therefrom, and may be configured to control the powertrain assembly, i.e. the drivetrain assembly, according to such control signals.

In addition, electronic control unit may be configured to set the inching control device 10, i.e. the forward inching command 11 and the backward inching command 12, in an enabled state or in a disabled state.

In particular, electronic control unit may be configured to retrieve data related to the operation of such inching control device 10 and may be configured to switch the inching control device 10 in the enabled state and/or in the disabled state based on such data. In other words, electronic control unit may be configured to activate or deactivate the inching control device 10 in function of the former data.

Electronic control unit is further configured to verify at least one predetermined operative condition of the work vehicle 1.

In particular, such predetermined operative condition may be related to an operative position of a park brake device (not shown) of the work vehicle 1.

Indeed, as known, such park brake device may be operatively connected to the drivetrain assembly and may be configured to control this latter to hold the work vehicle 1 stationary on the ground when engaged.

In addition, such predetermined operative condition may be related to the operation of electronically controlled actuators, such as electric valves or the like, that selectively engage the drivetrain assembly.

In particular, electronic control unit may be configured to detect any fault in the operation of such electronically controlled actuators.

Moreover, such predetermined operative condition may be related to the operation of a communication line, such as a CAN BUS communication line or the like, operatively interposed between the electronic control unit and the drivetrain assembly.

In particular, electronic control unit may be configured to detect any fault in the operation of such communication line.

Electronic control unit may be further configured to set the inching control device 10, i.e. the forward inching command 11 and the backward inching command 12, in the enabled state or in the disabled state in function of the predetermined operative condition of the work vehicle.

In particular, electronic control unit may be configured to set the inching control device 10 in the enabled state when the park brake device has been engaged.

In addition, electronic control unit may be configured to set the inching control device 10 in the enabled state when it does not detect any fault in the operation of the aforementioned electronically controlled actuators and/or in the operation of the aforementioned communication line.

In addition, electronic control unit may be electrically connected to the lighting device 7 and may be configured to control the operation of this latter on the basis of the control signal received from the inching control device 10.

The electronic control unit may be further configured to retrieve operational data related to an interlock operation of the work vehicle 1.

Preferably, such predetermined interlock operation may comprise the attachment operation of a work implement to the rear coupling assembly 5 of the work vehicle 1.

Electronic control unit may further be configured to switch the inching control device 10 in the enable state or in the disable state on the basis of the such operational data.

More in detail, electronic control unit may be configured to switch temporarily the inching control device 10 in the disabled state during such interlock operation, on the basis of the such operational data.

In particular, electronic control unit may be configured to switch temporarily the inching control device 10 in the disabled state when the forward inching command 11 and the backward inching 12 command are operated simultaneously.

In addition, electronic control unit may be configured to switch temporarily the inching control device 10 in the disabled state if the forward inching command 11 or the backward inching command 12 is operated by the user for a predetermined time interval t4.

Preferably, such predetermined time interval t4 may be equal or greater than 12 seconds.

In addition, electronic control unit may be configured to switch temporarily the inching control device 10 in the disabled state when it detects a fault in the operation of the aforementioned park brake device.

For example, a fault in the operation of the park brake device may be related to an overheating of such park brake device.

The operation of the above described vehicle is the following.

During an interlocking operation of a work implements to the rear coupling assembly 5 of the work vehicle 1, supposing that the work vehicle 1 needs to be inched back to be correctly placed with respect to the work implement, the user operates the inching command 11 and the backward inching command 12 simultaneously to enable such inching control device 10.

In a first phase, the lighting device 7 is immediately turned on, in order to visually communicate to the user that the inching control device 10 has been enabled.

Then, in a second phase, the user operates the backward inching command 12 in order to move slowly the work vehicle 1 backward.

Once the work vehicle 1 is correctly aligned with respect to the work implements, then in a third phase the user interlocks the work implement to the rear coupling assembly 5.

During this third phase, the inching control device 10 may be temporarily disabled and the lighting device 7 may be commanded to flash. The flashing of the lighting device 7 allows to visually communicate to the user that the inching control device 10 has been temporarily disabled.

Then, after the work implement has been interlocked to the rear coupling assembly 5, the inching control device 10 may be enabled and the lighting device 7 may be immediately turned on again.

Then, in a fourth phase, the user operates the inching command 11 and the backward inching command 12 simultaneously to disable such inching control device 10.

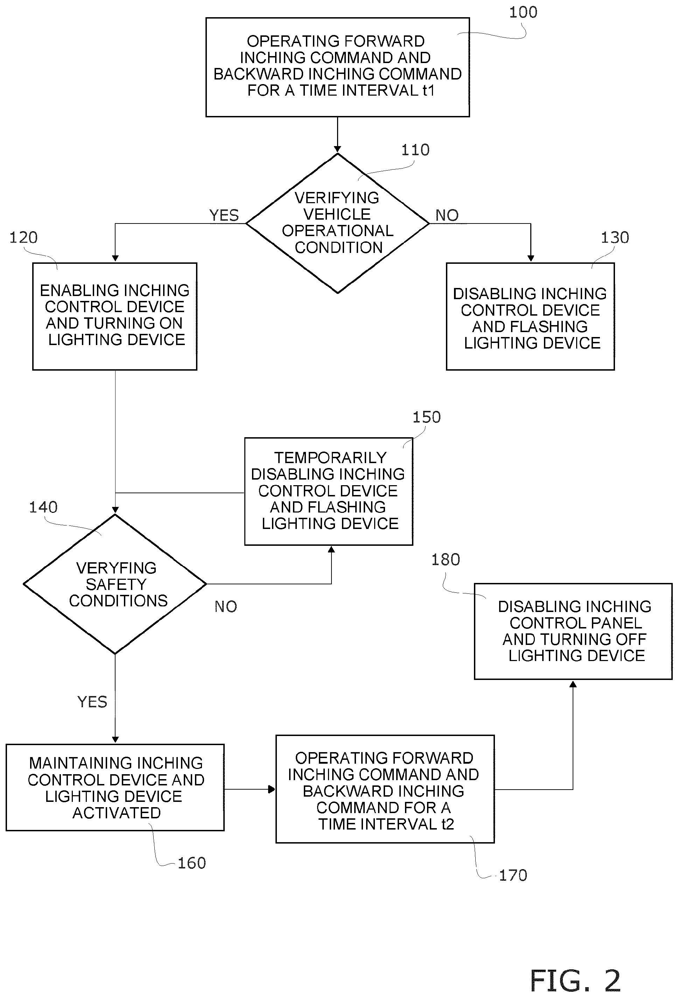

In view of the above operation, the present invention is related to a method for activating the inching functionality of the work vehicle, as schematized in Figure 2. In particular, electronic control unit may be configured to carry out the aforementioned method.

The method will be described supposing that, at an initial step, the inching control device 10 is disabled.

The method comprises the following steps:
- operating the forward inching command 11 and the backward inching command 12 simultaneously for a predetermined time interval t1 (block 100),
- verifying the predetermined operative condition of the work vehicle 1 (block 110),
- if such predetermined operative condition is met (output YES from block 110), switching the inching control device 10 in the enabled state and commanding the activation of the lighting device 7 in a first operative mode (block 120),
- if such predetermined operative condition is not met (output NO from block 110), maintaining the inching control device 10 in the disabled state and commanding the activation of the lighting device 7 according to a second operative mode (block 130).

Preferably, said predetermined time interval t1 may be comprised between 0,5 seconds and 2 seconds, and in particular it may be equal to 1 second.

In addition, in the first operative mode, the lighting device 7 may be switched on. More in detail, in the first operative mode, the lighting device 7 may be kept switched on until the inching control device 10 is enabled.

In the second operative mode, on the other hand, the lighting device 7 may be controlled to flash with a predetermined duty cycle dt1. In particular, such duty cycle dt1 may be equal, for example, to 0.5 seconds.

In addition, in the second operative mode, the lighting device 7 may be controlled to flash for a predetermined time internal t2. In particular, the predetermined light interval t2 may be equal to 2 seconds.

The step of verifying the predetermined operative condition of the work vehicle 1 (block 110), in turn, comprises the step of verifying the engagement of the park brake device and/or the absence of faults in the operation of the electronically controlled actuators and/or the absence of faults in the operation of the aforementioned communication line.

Preferably, the method may further comprise the following steps:
- verifying recursively a safety condition related to the interlock operation of the work vehicle 1 (block 140),
- if such safety condition is not met (output NO from block 140), switching immediately the inching control device 10 in a temporarily disabled state and commanding the activation of the lighting device 7 in a third operative mode (block 150), and
- if such safety condition is met (output YES from block 140), maintaining the inching control device 10 in the enabled state and maintaining the lighting device 7 activated in the first operative mode (block 150).

More in detail, the step of verifying the safety condition related to the interlock operation of the work vehicle 1 may comprise the step of verifying if the forward inching command 11 and the backward inching command 12 are operated simultaneously.

In addition, the step of verifying the safety condition related to the interlock operation of the work vehicle 1 may comprise the step of verifying if the forward inching command 11 or the backward inching command 12 has been operated for a period greater than the time interval t4.

Moreover, the step of verifying the safety condition related to the interlock operation of the work vehicle 1 may comprise the step of verifying the absence of faults in the operation of the park brake device.

In the third operative mode, the lighting device 7 may be controlled to flash with a predetermined duty cycle dt2. In particular, such duty cycle dt2 may be equal, for example, to 0.5 seconds.

Moreover, in the third operative mode, the lighting device 7 may be controlled to keep flashing until the inching control device 10 is set in the disabled state.

In addition, the method may further comprise the following steps:
- operating the forward inching command 11 and the backward inching command 12 simultaneously for a predetermined time interval t3 (block 170), and
- setting the inching control device 10 in the disabled state and commanding the deactivation of the lighting device 7 (block 180).

Preferably, the time interval t3 may be equal to 2 seconds.

In view of the foregoing, the advantages of a work vehicle provided with an apparatus programmed to carry out the method according to the invention are apparent.

First, the proposed method allows to provide the user with an immediate feedback of the activation of the inching functionality of the work vehicle. Indeed, the user may immediately understand if the inching functionality of the work vehicle has been enabled, simply by looking at the operation of the rear lights of the work vehicle, that are advantageously placed near the control device. This allow to improve the safety of the inching functionality of the work vehicle 1.

In addition, according to the proposed method, the inching control device 10 normally is set in the disabled state, and is switched in the enabled state only when the user successfully complete the inching activation method above described.

Therefore, it is reduced the risk that a user operating nearby the work vehicle may accidentally press the inching control device 10, with all the benefits that this entails.

It is clear that modifications can be made to the described method which do not extend beyond the scope of protection defined by the claims.

For example, the drivetrain assembly may be provided with a CVT (Continuously Variable Transmission) configuration comprising, for example, a hydrostatic transmission, a hydromechanical transmission, etc.

Moreover, the lighting device 7 may be configured to perform further light functions apart from signaling the sudden deceleration of the work vehicle 1. For instance, the lighting device 7 may comprise a reversing light, a turning light and/or a position light of the work vehicle 1.

In addition, the lighting device 7 may also be a warning light that is arranged apart from the taillight of the work vehicle 1.

Moreover, the aforementioned time intervals t1, t2 and t3 and the duty cycles dt2 and dt2 could also be set with different values apart from those indicated above.

Finally, in the first operative mode, the lighting device 7 could be configured to flash with a duty cycle lower or equal to 0.1 s, in order to flash with a relatively high frequency and draw the attention of the user even better.

## Claims

1. A method for activating an inching functionality of a work vehicle (1) wherein said inching functionality is disabled, said work vehicle (1) comprising:
- at least one inching control device (10) configured to control said inching functionality, said inching control device (10) being provided with a forward inching command (11) configured to be operated for controlling a forward movement of said work vehicle (1), and a backward inching command (12) configured to be operated for controlling a backward movement of said work vehicle (1); and
- at least one lighting device (7) which is arranged on the work vehicle (1) and is configured to perform a predetermined light function,
said method comprising the steps of:
i) operating said forward inching command (11) and said backward inching command (12) simultaneously for a first predetermined time interval (t1),
ii) checking at least one predetermined operative condition of said work vehicle (1),
iii) if said predetermined operative condition is met, switching said inching control device (10) in an enabled state and commanding the activation of said lighting device (7) according to a first operative mode, and
iv) if said predetermined operative condition is not met, maintaining said inching control device (10) in the disabled state and commanding the activation of said lighting device (7) according to a second operative mode,
wherein the checking of said at least one predetermined operative condition of said work vehicle (1) in step ii) comprises the step of verifying the engagement of a park brake device of the work vehicle (1) and/or the absence of faults in the operation of a drivetrain assembly of said work vehicle (1) and/or the absence of faults in a communication line operatively interposed between said drivetrain assembly and at least one electronic control unit of said work vehicle (1).

2. Method according to Claim 1, wherein in said first operative mode, said lighting device (7) is controlled to be kept switched on when said inching control device (10) is set in the enabled state.

3. Method according to Claim 1 or 2, wherein in said second operative mode, said lighting device (7) is controlled to flash with a predetermined duty cycle (dt1).

4. Method according to Claim 1, 2 or 3, wherein in said second operative mode, said lighting device (7) is controlled to flash for a second predetermined time interval (t2).

5. Method according to Claim 3 and 4, wherein said first predetermined time interval (t1) is equal to 1 second and/or said predetermined duty cycle (dt1) is equal to 0.5 second and/or said second predetermined time interval (t2) is equal to 2 seconds.

6. Method according to any one of the foregoing claims, further comprising the steps of:
v) verifying recursively a safety condition related to an interlock operation of said work vehicle (1),
vi) if said safety condition is not met, switching immediately said inching control device (10) in a temporarily disabled state and commanding the activation of said lighting device (7) in a third operative mode, and
vii) if said safety condition is met, maintaining said inching control device (10) in the enabled state and maintaining said lighting device (7) activated in said first operative mode.

7. Method according to Claim 6, wherein the verifying recursively of said safety condition in step v) comprises the step of verifying if said forward inching command (11) and said backward inching command (12) are operated simultaneously and/or the step of verifying if said forward inching command (11) or said backward inching command (12) has been operated for a period greater than a fourth predetermined time interval (t4) and/or the step of verifying the absence of faults in the operation of a park brake device of said work vehicle (1).

## Patentansprüche

1. Verfahren zum Aktivieren einer Kriechgangfunktionalität eines Arbeitsfahrzeugs (1), wobei die Kriechgangfunktionalität deaktiviert ist, wobei das Arbeitsfahrzeug (1) umfasst:
- mindestens eine Kriechgangsteuervorrichtung (10), die zum Steuern der Kriechgangfunktionalität konfiguriert ist, wobei die Kriechgangsteuervorrichtung (10) mit einem Vorwärtskriechgangbefehl (11), der zur Betätigung für das Steuern einer Vorwärtsbewegung des Arbeitsfahrzeugs (1) konfiguriert ist, und einem Rückwärtskriechgangbefehl (12), der zur Betätigung für das Steuern einer Rückwärtsbewegung des Arbeitsfahrzeugs (1) konfiguriert ist, versehen ist; und
- mindestens eine Beleuchtungsvorrichtung (7), die an dem Arbeitsfahrzeug (1) angeordnet ist und konfiguriert ist, um eine vorbestimmte Leuchtfunktion durchzuführen,
wobei das Verfahren die Schritte umfasst:
i) gleichzeitiges Betätigen des Vorwärtskriechgangbefehls (11) und des Rückwärtskriechgangbefehls (12) für ein erstes vorbestimmtes Zeitintervall (t1),
ii) Überprüfen mindestens einer vorbestimmten Betriebsbedingung des Arbeitsfahrzeugs (1),
iii) falls die vorbestimmte Betriebsbedingung erfüllt ist, Schalten der Kriechgangsteuervorrichtung (10) in einen aktivierten Zustand und Anfordern der Aktivierung der Beleuchtungsvorrichtung (7) gemäß einem ersten Betriebsmodus, und
iv) falls die vorbestimmte Betriebsbedingung nicht erfüllt ist, Beibehalten der Kriechgangsteuervorrichtung (10) in dem deaktivierten Zustand und Anfordern der Aktivierung der Beleuchtungsvorrichtung (7) gemäß einem zweiten Betriebsmodus, wobei
das Überprüfen der mindestens einen vorbestimmten Betriebsbedingung des Arbeitsfahrzeugs (1) in Schritt ii) den Schritt des Verifizierens des Eingriffs einer Feststellbremsvorrichtung des Arbeitsfahrzeugs (1) und/oder der Abwesenheit von Fehlern in dem Betrieb einer Antriebsstranganordnung des Arbeitsfahrzeugs (1) und/oder der Abwesenheit von Fehlern in einer Kommunikationsleitung, die funktionell zwischen der Antriebsstranganordnung und mindestens einer elektronischen Steuerung des Arbeitsfahrzeugs (1) angeordnet ist, umfasst.

2. Verfahren nach Anspruch 1, wobei in dem ersten Betriebsmodus die Beleuchtungsvorrichtung (7) so gesteuert wird, dass sie eingeschaltet bleibt, wenn die Kriechgangsteuervorrichtung (10) in den aktivierten Zustand versetzt wird.

3. Verfahren nach Anspruch 1 oder 2, wobei in dem zweiten Betriebsmodus die Beleuchtungsvorrichtung (7) so gesteuert wird, dass sie mit einer vorbestimmten Einschaltdauer (dt1) blinkt.

4. Verfahren nach Anspruch 1, 2 oder 3, wobei in dem zweiten Betriebsmodus die Beleuchtungsvorrichtung (7) so gesteuert wird, dass sie für ein vorbestimmtes Zeitintervall (t2) blinkt.

5. Verfahren nach Anspruch 3 und 4, wobei das erste vorbestimmte Zeitintervall (t1) gleich 1 Sekunde ist und/oder die vorbestimmte Einschaltdauer (dt1) gleich 0,5 Sekunden ist und/oder das zweite vorbestimmte Zeitintervall (t2) gleich 2 Sekunden ist.

6. Verfahren nach einem der vorstehenden Ansprüche, ferner umfassend die Schritte:
v) rekursives Verifizieren einer Sicherheitsbedingung in Bezug auf eine Verriegelungsoperation des Arbeitsfahrzeugs (1),
vi) falls die Sicherheitsbedingung nicht erfüllt ist, sofortiges Umschalten der Kriechgangsteuervorrichtung (10) in einen vorübergehend deaktivierten Zustand und Anfordern der Aktivierung der Beleuchtungsvorrichtung (7) in einem dritten Betriebsmodus, und
vii) falls die Sicherheitsbedingung erfüllt ist, Beibehalten der Kriechgangsteuervorrichtung (10) in dem aktivierten Zustand und Beibehalten der Beleuchtungsvorrichtung (7) in einem aktivierten Zustand in dem ersten Betriebsmodus.

7. Verfahren nach Anspruch 6, wobei das rekursive Verifizieren der Sicherheitsbedingung in Schritt v) den Schritt des Verifizierens umfasst, ob der Vorwärtskriechgangbefehl (11) und der Rückwärtskriechgangbefehl (12) gleichzeitig betätigt werden, und/oder den Schritt des Verifizierens, ob der Vorwärtskriechgangbefehl (11) oder der Rückwärtskriechgangbefehl (12) für eine Zeitdauer betätigt wurde, die größer als ein viertes vorbestimmtes Zeitintervall (t4) ist, und/oder den Schritt des Verifizierens der Abwesenheit von Fehlern beim Betrieb einer Feststellbremsvorrichtung des Arbeitsfahrzeugs (1).

## Revendications

1. Procédé d'activation d'une fonctionnalité d'approche lente d'un véhicule de travail (1) dans lequel ladite fonctionnalité d'approche lente est désactivée, ledit véhicule de travail (1) comprenant :
- au moins un dispositif de commande d'approche lente (10) configuré pour commander ladite fonctionnalité d'approche lente, ledit dispositif de commande d'approche lente (10) étant pourvu d'un ordre d'approche lente vers l'avant (11) configuré pour être actionné pour commander un mouvement vers l'avant dudit véhicule de travail (1), et d'un ordre d'approche lente vers l'arrière (12) configuré pour être actionné pour commander un mouvement vers l'arrière dudit véhicule de travail (1) ; et
- au moins un dispositif d'éclairage (7) qui est disposé sur le véhicule de travail (1) et est configuré pour effectuer une fonction d'éclairage prédéterminée,
ledit procédé comprenant les étapes consistant à :
i) actionner ledit ordre d'approche lente vers l'avant (11) et ledit ordre d'approche lente vers l'arrière (12) simultanément pendant un premier intervalle de temps prédéterminé (t1),
ii) vérifier au moins une condition de fonctionnement prédéterminée dudit véhicule de travail (1),
iii) si ladite condition de fonctionnement prédéterminée est satisfaite, commuter ledit dispositif de commande d'approche lente (10) dans un état activé et ordonner l'activation dudit dispositif d'éclairage (7) selon un premier mode de fonctionnement, et
iv) si ladite condition de fonctionnement prédéterminée n'est pas satisfaite, maintenir ledit dispositif de commande d'approche lente (10) dans l'état désactivé et ordonner l'activation dudit dispositif d'éclairage (7) selon un deuxième mode de fonctionnement, dans lequel
la vérification de ladite au moins une condition de fonctionnement prédéterminée dudit véhicule de travail (1) à l'étape ii) comprend l'étape consistant à vérifier la mise en prise d'un dispositif de frein de stationnement du véhicule de travail (1) et/ou l'absence de défauts dans le fonctionnement d'un ensemble de transmission dudit véhicule de travail (1) et/ou l'absence de défauts dans une ligne de communication interposée de manière fonctionnelle entre ledit ensemble de transmission et au moins une unité de commande électronique dudit véhicule de travail (1).

2. Procédé selon la revendication 1, dans lequel, dans ledit premier mode de fonctionnement, ledit dispositif d'éclairage (7) est commandé pour être maintenu allumé lorsque ledit dispositif de commande d'approche lente (10) est réglé dans l'état activé.

3. Procédé selon la revendication 1 ou 2, dans lequel, dans ledit deuxième mode de fonctionnement, ledit dispositif d'éclairage (7) est commandé pour clignoter avec un cycle de service prédéterminé (dt1).

4. Procédé selon la revendication 1, 2 ou 3, dans lequel, dans ledit deuxième mode de fonctionnement, ledit dispositif d'éclairage (7) est commandé pour clignoter pendant un second intervalle de temps prédéterminé (t2).

5. Procédé selon les revendications 3 et 4, dans lequel ledit premier intervalle de temps prédéterminé (t1) est égal à 1 seconde et/ou ledit cycle de service prédéterminé (dt1) est égal à 0,5 seconde et/ou ledit second intervalle de temps prédéterminé (t2) est égal à 2 secondes.

6. Procédé selon l'une quelconque des revendications précédentes, comprenant en outre les étapes consistant à :
v) vérifier de manière récursive une condition de sécurité liée à un fonctionnement de verrouillage dudit véhicule de travail (1),
vi) si ladite condition de sécurité n'est pas satisfaite, commuter immédiatement ledit dispositif de commande d'approche lente (10) dans un état temporairement désactivé et ordonner l'activation dudit dispositif d'éclairage (7) dans un troisième mode de fonctionnement, et
vii) si ladite condition de sécurité est satisfaite, maintenir ledit dispositif de commande d'approche lente (10) dans l'état activé et maintenir ledit dispositif d'éclairage (7) activé dans ledit premier mode de fonctionnement.

7. Procédé selon la revendication 6, dans lequel la vérification de manière récursive de ladite condition de sécurité à l'étape v) comprend l'étape consistant à vérifier si ledit ordre d'approche lente vers l'avant (11) et ledit ordre d'approche lente vers l'arrière (12) sont actionnés simultanément et/ou l'étape consistant à vérifier si ledit ordre d'approche lente vers l'avant (11) ou ledit ordre d'approche lente vers l'arrière (12) a été actionné pendant une période supérieure à un quatrième intervalle de temps prédéterminé (t4) et/ou l'étape consistant à vérifier l'absence de défauts dans le fonctionnement d'un dispositif de frein de stationnement dudit véhicule de travail (1).
